# EUROPEAN PATENT APPLICATION

(11) **EP 3 407 194 A2**
(43) Date of publication of application: **28.11.2018**
(21) Application number: 18382539.7
(22) Date of filing: 19.07.2018
(51) Int. Cl.: G06F 9/50

(54) **METHOD FOR THE DEPLOYMENT OF DISTRIBUTED FOG COMPUTING AND STORAGE ARCHITECTURES IN ROBOTIC MODULAR COMPONENTS**

(71) Applicant: Erle Robotics, S.L., 01006 Vitoria-Gasteiz (ES)
(72) Inventor: MUÑIZ ROSAS, ADAY, 01006 VITORIA-GASTEIZ (ES); SAN VICENTE GUTIÉRREZ, CARLOS, 01006 VITORIA-GASTEIZ (ES); ZAMALLOA UGARTE, IRATI, 01006 VITORIA-GASTEIZ (ES); MAYORAL VILCHES, VÍCTOR, 01006 VITORIA-GASTEIZ (ES)

(57) **Abstract**

A method for the deployment of a fog computing and storage architecture in robotic modular components making up a modular robotic system; this method comprising resource accounting, task requirements listing, fog coordination, resource externalization and deployment of the fog architecture. Specific modular robots featuring the characteristics needed to deploy the method are also provided. The components making up the modular robotic system are fog modules acting as edge nodes at the same time since they are both providers and recipients of the computing or storage resources shared in the fog layers, what allows for the deployment of an autonomous fog robotics architecture.

## Description

### Technical Field

The invention relates to the field of robotics. More specifically, to improved methods applying fog technology for the enhancement of distributed computing and storage architectures in modular robots. Additionally, the invention relates to embedded system technology for the deployment of such methods.

### Background Art

Individual on-device computing and storage resources are limited and state-of-the-art dependent. A reliance on external sources proves unsatisfactory for many cases where autonomy and low latencies are sought over almost infinite means of sustenance such as those provided by powerful computers or cloud storage services. Similarly, when applied to robotic systems, new technological paradigms tend to seek for the development of new ways of using limited resources in an escalating wise manner.

Hence, the present invention discloses a technological improvement in the form of a method aimed at deploying distributed fog computing and storage architectures in a modular robotic system. Ultimately, this method enables the system to optimize its computing and storage capabilities and the management of such in a distributed way among components making up a given modular robot.

The fog computing paradigm is usually presented as an alternative approach to the widespread cloud computing paradigm. However, this standpoint has proven limiting for its application in certain technological areas for varied reasons, among them, because of the fog computing paradigm being exclusively associated with the so-called Internet of Things (loT). What is more, the loT is continuously intended to be comprehensive of all types of networks of electronic apparatuses that are provided with connectivity to the Internet.

For this reason, immediately following the increase and diffusion of modularity within the robotics scene, robotic components configured to proactively send individual information about themselves have steadily been equated with networked things within the loT, as if they were smartphones or laptops. This is, unfortunately, a rather simplistic and reductionist point of view. Indeed, among other differential aspects, robotic systems feature special characteristics such as means of interaction and actuation with their environments that classical loT devices do not.

On the other hand, and as for the traditional dichotomy between cloud and fog supported by most common approaches in the state of the art, although adequate as a general principle, it is however constraining for its overall application in many other technical fields, including robotics. For instance, one of the most recurring applications of fog computing approaches for robotic systems is the setting up of a fog layer for image processing. This allows for the consecution of lower latencies when managing video streaming, whereas the computing workload is shifted from the cloud to instances located nearer to the edge devices.

Other approaches to fog computing advocate for the employment of fog nodes in industry, what would allegedly allow for a convergence of a multiplicity of instances, from hardware to networking, in one single apparatus for general management. Such fog nodes would centralize processes that may be on the need of a direct monitoring and immediacy of response, and therefore cannot rely on cloud structures for all purposes.

In this sense, documents such as US20160182639A1 or CN107172166A openly relate to methods for improving the realization of different tasks within the loT through fog computing networks. Such tasks range from the installation and version management of applications to the enhancement of industrial intelligent services through multi-scale network architectures that include both cloud and fog computing subsystems. In the same way, US20180067779A1 relates to a fog agent that provides edge intelligence for a plurality of loT devices. Therefore, these documents replicate the traditional schema described above.

Other implementations for industry are disclosed by US20170295109A1, which describes an on-demand resources system where the fog computing module is an additive resource that gets attached to an existing fog computing resource module. Likewise, for the technical field of communications, CN107222843A addresses problems such as long network delay and processing costs by providing a software-defined network (SDN) controller that manages the network as well as the computing and storage resources of the fog network nodes in a unified manner.

However, a right and ubiquitous enhancement of the fog paradigm for a large variety of fields, including robotics, require a generalization of processes that may be powered in a fog-wise manner. This should succeed irrespective of the greater or lesser extent of cloud reliance as a constraint or framework to depart from while seeking for innovative solutions aiming at achieving processing velocity and storage autonomy within a robotic system.

In this respect, a more comprehensive definition of fog computing proves necessary, including a way of distribution of the computational workload and the storage capacity between modular components, as if they were authentic fog modules. At the same time, these fog modules should eventually act as the resources-constrained edge nodes or final recipients of the operations. Accordingly, the on-demand resources for fog modules in a robotic system are thus allocated in other fog modules of the same robotic system, thereby making up so-called robotic fog layers. Everything in place for what has come to be called fog robotics in a simplified manner.

Hence, the conjunction of robotic modular components that are provided with both own and additional resources, either computing or storage ones, coming from or allocated in the rest of the fog modules, results in a cooperative and distributed fog network that allows for the performance of tasks in a more efficient and autonomous manner. For example, in order to bypass drawbacks deriving from an excessive reliance on the Internet, the disclosed fog robotics architecture provides resources autonomy not only in terms of computing, but also in the sense of storage capacity, if necessary.

For this reason, distributed fog computing and storage architectures could also be useful to provide resources locally for the event that an access to the Internet is not possible or not desired at a given time. In this sense, the fog distribution is deemed as a self-generated source of resources that can be employed in instances near to the edge devices, therefore without relying on external sources.

Accordingly, CN107659672A discloses a monitoring device applied to a machine room. Such device employs fog computing architecture so that the logical processing quantity in cloud platforms when monitoring or linking components is reduced, thereby minimizing the reliance on Internet. Similarly, CN107508698A provides a method based on content awareness and weighted graph that aids to reduce time computational costs, thus reducing the overall energy consumption of a fog system.

As mentioned above, such disclosures are consistent with well-known applications of fog nodes in industry, yet do not address the same problem when it refers to modular robots that might not be thought to rely on external resources.

Within such a distributed computing schema, fog modules also act as fog agents that monitor the state of the system and the existing resources. Likewise, they are engaged to manage and facilitate accessibility to the available resources according to priority levels determined, for instance, in terms of urgency or real computing or storage capacity. Provided that modules within a modular robot are steadily struggling for higher capabilities or the best of the capabilities possible in order to perform either autonomous or aggregate tasks, the disclosed method aims at playing an important role as technological improvement over well-known achievements in fog science.

Moreover, by way of employing fog technology in modular robots, improved methods for enhancing the computing and storage capabilities of a modular robotic system are triggered. This way, since real computing and storage capabilities are irrespective of a concrete component or a group of components, even of a concrete unit undertaking cognition and processing tasks at the same time, the system performance is far more scalable just by adding new components or replacing others while keeping the system architecture untouched.

Also oriented to the loT, US20170366472A1 provides what is presented as a fog computing network resource partitioning where a fog orchestrator is configured to determine allocations of fog resources for competing client applications and partition the competing client applications based on the fog resource allocations. As described, such fog orchestrator seems to be one or more nodes that manage the access of different client devices such as smartphones or laptops, as well as sensors or actuators, to the resources allocated in the fog layers, so that such devices can compete for getting enough resources to run own applications. The cited fog nodes seem to be the same devices that request resources from the fog network.

Such disclosure, although in some ways enabling to solve problems on resource management existing in the traditional loT, does not conceive that a plurality of resource carriers within a network may be committed to carry out a same task while sharing computing and storage capabilities in a distributed way. Instead of including complete robots as part of the network, as most of the loT-oriented disclosures on fog computing do, the aim of the present invention is to apply fog architectures within a same robotic system characterized by a variable number of potentially autonomous components.

For their part, documents such as CN107508698A or US20170337091A1 further develop fog architectures. Yet interesting is the approach given by US20170337091A1 as it provides systems, methods and programs to allocate compute offload resources based on a fog computing platform and levels of priority, such technological improvements do not escalate enough for integral enhancements in conventional robotics nor in the modularity that is characteristic of modern robotic systems.

As pointed out above, the traditional loT approach, as well as its counterpart for fog computing, do not suit the needs identified for the modularity in robots. Therefore, approaches and solutions aimed at their application for robotics are still lacking and intended to be provided by the invention hereby disclosed.

### Summary of invention

A method aimed at applying fog technology and fog-powered networks in a modular robotic system is provided. The method of this invention comprises the integration of modular components for the enhancement of a distributed fog computing and storage architecture within a modular robotic system, thereby empowering the creation of robotic fog layers.

In a first aspect of the invention, a resource accounting of distributed computing among the attached modular components is realized while building the logical computing model of the assembled modular robot. A list of available computing resources existing in the fog layers is thereby provided. Additionally, a resource accounting of distributed storage among the attached modular components can also be realized while building a logical storage model of the assembled modular robot. A list of available storage resources existing in the fog layers is thereby provided. Likewise, a priority task list is determined according to the at least one designated operator's preferences or by the constraints imposed by the robot logical model and the inferred computing model.

In a second aspect of the invention, the computational resources required for the performance of a given task are estimated by employing certain computing inference mechanisms aimed at developing computing models, in some embodiments patterned after neuromorphic models. Different artificial intelligence (Al) techniques can successively be employed in order to accelerate this process. Additionally, same computing inference mechanisms are employed while developing storage models for the robotic system.

In a third aspect of the invention, a fog coordinator is provided for the deployment of the fog computing and/or storage architecture among the fog modules allocated in the fog layers. Therefore, the corresponding computation or storage structure is deployed through the fog modules. As a improvement in fog robotics, traditionally cloud-based training processes can be performed locally and also distributed in the robotic fog layers. As a development, some artificial intelligence techniques are proposed for training the behaviour of the fog coordinator.

In another aspect of the invention, ways of exceptionally relying on sources external to the fog robotic system such as local servers or cloud services, given certain circumstances or computing constraints, are also provided.

Lastly and as a preferred embodiment of the invention, robotic systems, namely modular robots furnished with the electronics needed to deploy the method based on fog technology hereby disclosed, are provided. The components making up the disclosed modular robots are fog modules acting as edge nodes at the same time since they are both providers and recipients of the computing or storage resources shared within the robotic system, what allows for a deployment of a fog robotics architecture.

The structures and methods of the present invention are disclosed in the detailed description below. This summary does not purport to define the invention since the invention is defined by the claims. These and other embodiments, features, aspects, and advantages of the invention will become better understood with regard to the following description, appended claims, and accompanying drawings.

### Brief description of drawings

A brief description of the accompanying drawings is provided irrespective of the additional and more detailed description of such likewise included as an integral part of the invention disclosed and intended to be complementary of a preferred embodiment thereof.
Fig. 1A is a representation of an exemplary fog robotics network within a given robotic device.
Fig. 1B is an additional representation of an exemplary fog robotics network within a given robotic device.

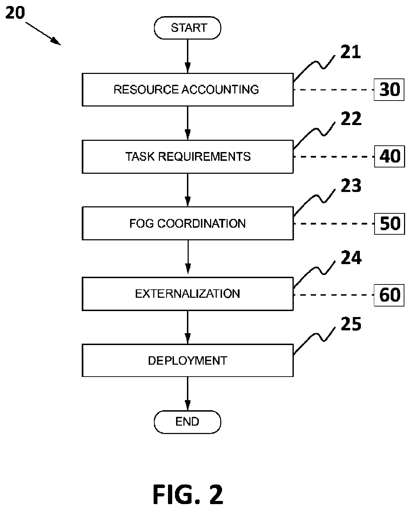

Fig. 2 is a flowchart comprising all steps aimed at developing a fog computing architecture within a modular robot.

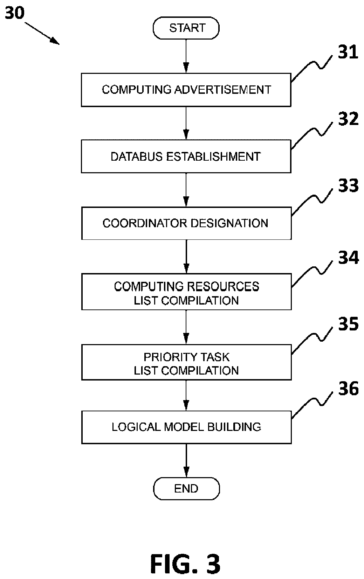

Fig. 3 is a flowchart comprising the substeps within the resource accounting step.

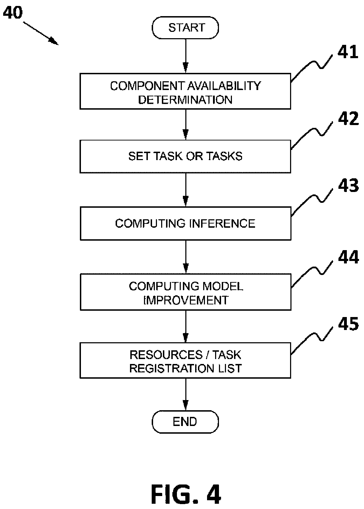

Fig. 4 is a flowchart comprising the substeps within the task requirements step.

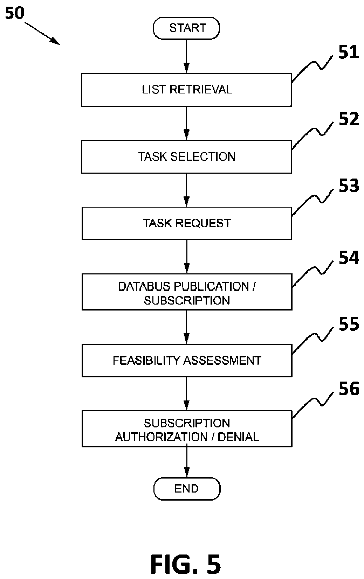

Fig. 5 is a flowchart comprising the substeps within the fog coordination step.

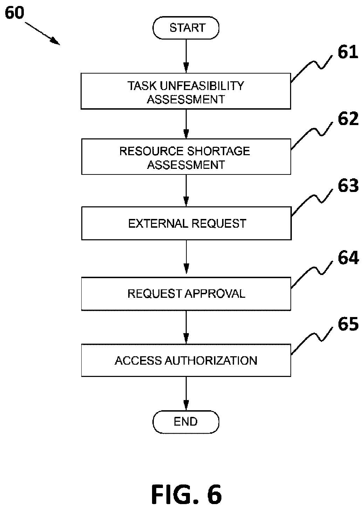

Fig. 6 is a flowchart comprising the substeps within the externalization step.

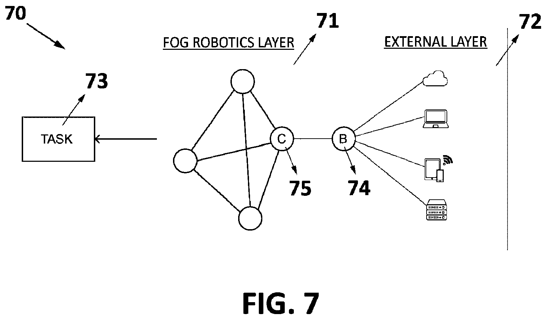

Fig. 7 is an ideogram of a fog robotics network.

### Description of embodiments

The present invention discloses a method aimed at providing modular robotic systems (10, 100) with distributed fog architectures (70) that enable to optimize the employment of computing and storage capabilities among modular components (11, 101) making up modular robots of any kind.

According to this method (20), the modular components within a modular robotic system are configured to advertise their computing capabilities (e.g. CPU, GPU, TPU), as well as their storage and other hardware capabilities, so that, depending on their specific typology, can be employed for different purposes such as robot control or interfacing, artificial neural networks training, image processing, logging, data analytics, bandwidth management, network configuration or condition monitoring, among others.

In a first aspect of the invention (30), a resource accounting of distributed self-computing capabilities provided by each one of the attached modular components is realized by at least one fog coordinator (75) while building the logical model of the assembled modular robot, so that a comprehensive list of resources is generated automatically after every system configuration. This way, once the physical and logical integration of modular components is complete, the resulting modular robot (as the sum of all modules) shall be provided with a given quantity of computing resources that are available for their use on-demand by all present fog components, as if they were authentic edge nodes at the same time.

Similarly, in either parallel or successive process or processes, storage capabilities of any of the modular components can likewise be accounted. In this sense, the at least one coordinator can be configured to build as many logical models as needed. In some embodiments, the logical model would be exclusively oriented to computing or storage capabilities separately. In other embodiments, logical models may include both computing and storage information altogether, depending on the task or tasks (73) in which the system may be engaged at a given time. Similarly, certain computing or storage capabilities could eventually need to be separated for other purposes, therefore not all available resources will always be accounted, as described below.

The resource accounting begins with the advertisement about self-computing or storage capabilities that all active modular components perform simultaneously (31). The basic way in which communications succeed within a modular robotic system can take the form of varied robotic middlewares. Some of them have been listed hereafter yet many others are intended to be valid for the purpose sought by the disclosed invention, as well as understood by those skilled in the art.

Exemplary robotics middlewares typically feature yet they are not limited to the following characteristics: a) a messaging system for managing communications between computing processes or nodes; b) a facility to capture data and replay it asynchronously without code modifications and regardless of the source of the data; c) a complementary facility to manage synchronous communications in the form of Remote Procedure Call (RPC) request/reply interactions; c) a parameter server where nodes can share configuration data allowing for a modification and a repurpose of the tasks being run.

In some embodiments, robotic communication middlewares based on the publish/subscribe methodology are employed. Examples of such robotic middlewares may include yet are not limited to the Data Distribution Service (DDS), the more abstract Robot Operating System (ROS) middleware, its sequel ROS 2 or the OPC UA binary protocol. Other robotic communication middlewares such as DDS for eXtremely Resource Constrained Environments (XRCEs) could also be used to interface components with limited resources that would later be bridged into any of the abovementioned publish/subscribe middlewares.

Nevertheless, and irrespective of the robotic middleware that is deployed in a given modular robotic system, data and other relevant information are dynamically treated, thus they may prove either useful or not for the purpose sought for a system at a given time. If not useful, they will be simply disregarded by the at least one processing unit in charge of coordination, namely the at least one module appointed as fog coordinator. Therefore, a higher number of fog modules working in a decentralized way within a given robotic system can operate as simultaneous coordinators, being thereby able to manage the robot operation and the deployment of the fog robotics architecture in a distributed way.

Once main databuses are established and adequately informed within the middleware (32), at least one of the processing units of the integrated modular components is designated to act as a coordinator (33) of the fog robotics deployed hereby, as explained above. This assignment is determined by the operator on the go or can be predefined before or during the integration of components, either randomly or according to preset rules such as higher processing capabilities.

The at least one coordinator is in charge of the compilation of a comprehensive and detailed list of the computing and/or storage resources (34) provided by the fog modules. Such a list includes yet is not limited to at least a reference to the identification of the existing resources, to the overall computing or storage capabilities of such and to the available computing or storage capacity, provided that the basic amount earmarked for basic system processes has already been tagged and docked.

In this sense, it is a main characteristic of the robot components within a modular robotic system to be provided with self-processing capabilities that allow them to manage and share own information in an independent manner, as described in the last aspect of this invention. Consequently, while the at least one coordinator is configured to request for this information individually without any prior knowledge, fog modules are able to self account their capabilities in order to generate and refresh this information dynamically. Since such information is always subject to changes while the system is functioning, the state of every fog module may thereby change from time to time. It will be the module itself which provides an update in due time, so that the coordinator can perform needed modifications.

While a priority task list (35) is simultaneously compiled, as described below, the resulting computing and storage resources map will then be used, along with the rest of the robot components' characteristics such as sensing, actuation, cognition, communication, power or user interfacing means, in order to build a basic logical model (36) of the modular robotic system at hand. This robot logical model comprising detailed yet static computing information will then be subjected to further inference mechanisms. Before that, but also in a later step, the real availability of advertised components is determined (41). Making it before aids to achieve more accurate predictions, provided that not all resources have to be employed during the whole time or for all tasks. Checking for availability after inference allows to verify that conditions have not changed in between.

In a second aspect of the invention (40), specific task requirements for given task or tasks to be performed (42) are determined by means of employing certain inference mechanisms (43) aimed at generating improved computing and storage models (44) out of these basic logical models. As a starting point for an efficient distribution and allocation of the resources available at a given time and accounted during the previous step, sets of different tasks to be performed are primarily determined in accordance with the active robot components and their advertised capabilities.

At the same time, the specific resources needed for the deployment of such tasks are likewise determined and registered, by the at least one fog coordinator, in a list of specific task requirements (45), which complements the resources list. In order for that to happen, accurate predictions of the computing and storage requirements to be employed during defined periods of time (e.g. seconds, minutes, hours) or for the performance of concrete tasks, subjected to different combinations of computing or storage resources, can be provided thanks to the employment of certain inference mechanisms.

Through such mechanisms, the computing requirements for the execution of a concrete task are automatically reckoned while taking into account the range of possible activities that a robotic system might be performing, according, on one hand, to the resources account carried out beforehand and, on the other hand, a preferred user configuration, provided that not all robots serve the same purpose. The results of these predictions are compiled into improved computing models which will be employed later on in training scenarios powered through varied neuromorphic techniques. Additionally, the resources needed for the dynamic storage of a given amount of data, many times parallel to computational workload, can also be calculated through these kinds of predictions and compiled into improved models that anticipate the requirements of a given system according to a set of actions and a time frame.

In some embodiments and in order to infer the requirements of the robot for a given task or a given period of time, it is possible to build the already mentioned computing models through Supervised Learning techniques typically consisting on capturing such computing models with neuromorphic representations, most commonly Artificial Neural Networks trained with backpropagation. Other algorithms and techniques for Supervised Learning could also apply and some examples include but are not restricted to Support Vector Machines, linear regression, logistic regression, nearest neighbor methods, naive Bayes, decision trees, linear discriminant analysis, genetic programming, evolutionary algorithms, random forests or ensembles of classifiers, among others.

Any of the abovementioned techniques can be used to improve the model which will be then employed to execute computing or storage inferences in a simulated environment where the robotic system undergoes one or a plurality of successive training processes. A training phase will typically be implemented through the use of Reinforcement Learning or Imitation Learning techniques and aims at accelerating the process of determining the right computing or storage configuration of the modular robot to accomplish a given task.

In some embodiments, given a set of individual limited resources known by way of robot modelling and a set of overall potential resources known by way of computing inference, different kinds of processes that the modular robot might potentially be performing at any time are assessed and certain values conferred in conformity with predefined configurations, considering the computing process of interest. In this respect, as mentioned above, a priority task list may be determined according to the at least one designated operator's preferences or in conformity with the constraints imposed by the robot's logical model improved through computing inference. Critical system processes as well as background processes are not matter of such a priority list.

In a third aspect of the invention (50), a fog coordinator is provided for the deployment of the fog computing and/or storage architecture among the modular components. At least one of the processing units of the robot components present at a given time can be in charge of coordination, what is to say that at least one fog module might be appointed as coordinator of the fog network architecture. Likewise, coordinator may not be a fog module within the fog network, but a instance external to it, provided it has complete access to manage the fog network. As a development, some artificial intelligence (Al) techniques are proposed for training the behaviour of the coordinator.

As in any typical publish/subscribe communication pattern, computing processes or nodes that are in need of certain data or capabilities subscribe to databuses where other computing processes or nodes have advertised their own capabilities at previous stages of the method. In other words, fog nodes are configured to request any feasible tasks irrespective of their own capabilities. In this way, since a plurality of processes may be being run at the same time, thereby be publishing and subscribing to same databuses simultaneously, the at least one coordinator is in charge of managing the list of priority levels in accordance with a predefined set of values assigned to each type of process during the configuration of the modular robotic system, as described above.

In some embodiments, the process followed within the modular robotic system for assessing computing or storage capabilities and developing own fog architectures, once the at least one coordinator has been provided with an updated list of resources, a list of task requirements and a priority list (51), is as follows:
1. A task to be performed is chosen (52).
2. The at least one central processing unit processes the request (53).
3. The processing units of the one or more modular components (e.g. fog nodes) publish to relevant databuses depending on the specific task or tasks to be performed. Simultaneously, one or more modular components, likewise depending on the task or tasks to be performed, try to subscribe to relevant databuses running at a given time (54).
4. The coordinator assesses the feasibility of the task (55) by comparing the list of task requirements and the resources availability compiled in the resources list. Resources to be employed are preferably hosted in the fog layers (71) and not external (72) to the robotic system.
5. In accordance with the priority task list, the coordinator assigns resources by allowing concrete subscriptions and denying others (56), if necessary. Thus, the corresponding computation or storage structure, in the way it has been modelled throughout this method, is ready to be deployed in the fog modules.

Consequently, as long as resources are enough and available, different processes of the same or different rank may simultaneously be being carried out while monitored by the at least one fog coordinator. On the other hand, in the event that two or more high-consuming processes are being executed at the same time but resources available at the fog layers, compound by all available fog modules, are not enough for a simultaneous deployment, such resources are assigned by the at least one coordinator to the task or tasks of higher rank in accordance with an overall value resulting from a combination of the list of task requirements and the list of priority levels, provided that one or more of the processes have lower priority levels and are no critical system processes.

By employing certain AI techniques such as Reinforcement Learning on artificial neural networks, the behaviour of the coordinator can be shaped to improve the development of the method hereby disclosed. To those skilled in the art will be clear how the dynamic of rewards and penalizations, as well as policy gradient methods, work in the training of artificial neural networks. In order to avoid excessive description deviations, the following embodiment aims at serving as exemplification of the hereby disclosed:
- Artificial neural networks trained with backpropagation and stochastic gradient descent are provided to shape the behaviour of the at least one fog coordinator. That is, the way in which the coordinator acts by applying this method. Actor-critic models aid to adjust the performance of the actor in accordance with the evaluation provided by the critic. Accordingly, rewards are conferred to more desired behaviours and penalizations imposed to less desired ones.
- The behaviour desired for the at least one coordinator (e.g. the wanted output) is to run a plurality of processes without having to resort to external sources, thereby rewards will be given to successful performances and penalizations imposed in the event of resources shortage or inadequate resources allocation.
- Parallel to every coordinator's performance as described above, artificial neural networks are fed accordingly and the process reiterated a number of times in simulation. Simultaneously, the critic provides evaluation on such performance, providing more reward to attempts that fit better the requirements of the system.
- Ultimately, artificial neural networks are trained to perform in the way desired while less wanted behaviours are progressively discarded as the amount of reward conferred is not big enough. As a result, for a given situation or set of tasks to be performed simultaneously (e.g. input), certain and expected output, namely a specific resource allocation performed by the at least one coordinator, will always be provided. Therefore, the behaviour of the modular robotic system led by the coordinator can be automatized through experience.
- Linked to the training of artificial neural networks and as an additional improvement in fog robotics, traditionally cloud-based training processes can be performed locally, at least partially, by distributing the workload between the fog modules in the robotic fog layers. In this sense, each one of the fog modules act as simulation machine for the training of neural networks and provide successive rollouts that are gathered and merged into a global policy. The process is reiterated in simulation until the expected output is obtained, then is deployed in the robotic system itself.

As pointed out above, ways of relying on sources external to the fog robotic system, given certain circumstances or computing constraints, are also provided (60). This way, a dependency on external sources such as computers (13), smart devices (102), local servers (103) or cloud services (12) is authorized for a case in point, but not for the rest of the processes running in parallel. This ensures both the autonomy of the system under certain computing constraints and the non-crash of the processes given exceptional conditions such as resources shortage or an inaccurate resource allocation by the fog coordinator.

The externalization request can happen in any of the stages of the method hereby disclosed, depending on the concrete embodiment at hand. In a first instance, when assessing the existing resources and building the robot logical model, the at least one fog coordinator may preempt that the published capabilities, given a prior robot configuration, would not objectively suffice for the execution of one or more of the tasks. Secondly, it may also happen that a potential resources shortfall stems from the computing inference, so that the task to be performed is not objectively unfeasible per se, but at the sight of potentially deployable scenarios (61).

Likewise, another situation may provide a resources shortage (62) when managing a priority list and assigning specific resources by the at least one coordinator. In some embodiments, processes of the same rank would need to be deployed at the same time and the fog architecture could not endure it. In other embodiments, processes of lower rank could be desired but one or more processes of same, higher or even lower rank might be being performed beforehand and a disruption is not desired or recommendable. As described above, the training phase aims at suppressing such embodiments from the range of possible behaviours to be deployed while promoting those ones that do not rely on external sources.

Nevertheless, for any of the cited embodiments, external resources such as local or remote servers, or even servers hosted in the cloud, are provided, so that an externalization request (63) may be sent by the at least one coordinator or the at least one designated operator at any time. This allows for the enhancement of a distributed decision-making schema where different instances may request external resources in a limited way and only if it is really necessary. Likewise, it will be determined only for the time and for the tasks where necessary (64, 65).

Summarizing, the process by which a resources externalization is requested and authorized typically comprises following steps:
1. A resource shortage is detected, determined and its range assessed by the at least one coordinator.
2. An externalization request is performed by the at least one coordinator. Such request must provide yet is not constrained by the determination of the task to be performed, the concrete resources quantity that is lacking, and that must be provided, as well as the time lapse expected for such provision.
3. The at least one coordinator, in a different instance or through a different process, or otherwise an externalized fog node (74) will determine the feasibility of the requested task while assessing the existence or non-existence of external resources which suffice for the request at a given time.
4. If feasible, the externalized fog node approves the operation and the access is authorized only in the extent of the coordinator's request, exactly as it was transmitted originally. If not feasible, the externalized fog node denies the operation, thereby the access is not authorized.
5. Further requests or request amendments must be processed separately so that they do not overlap with running requests.

In a last aspect and as a preferred embodiment of the present invention, modular robotic systems, namely modular robots (10, 100) furnished to deploy the method based on fog technology hereby disclosed, are provided. The modular components (11, 101) making up the disclosed modular robot are fog modules acting as edge nodes at the same time since they are either providers or recipients of the computing resources shared within the modular robotic system, thereby allowing for a deployment of a fog architecture (70).

A representative fog module features a hybrid module that integrates general purpose processors as well as programmable logic typically embodied in the form of an FPGA, as well as volatile and non-volatile memory, a network interface, sensors, actuators, etc. This module is configured to run logic in a deterministic manner (Real-Time) with well-established deadlines that meet the corresponding applications. Such deterministic configuration applies not only to the computer programs that run in the module itself but also to the communication interfaces used between modules. This aspect is typically realized by employing industrial networks, generally on top of Ethernet, and most commonly using norms such as the Time Sensitive Networking (TSN) set of standards. In addition, these modules also include means of power management which can deliver features such as selective lifecycle control (e.g. power on or off), maintenance prediction or quality assurance.

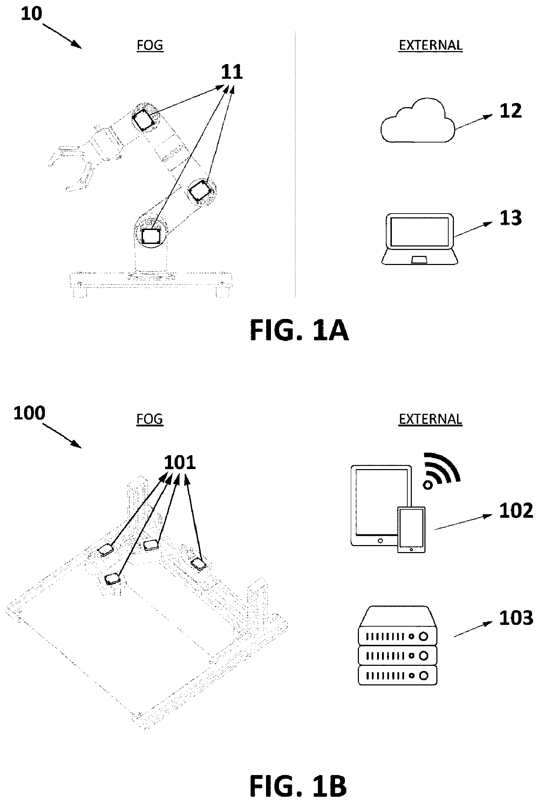

Since provided with own processing capabilities, at least one of the fog modules hereby disclosed can be designed as fog network coordinator in order to perform the task and resource allocation functions disclosed by the present invention. However, in some embodiments, these functions may be taken over by a central processing unit, located outside the fog network, so that fog network management and robotic system's general management are consolidated in a single instance. Sensors, actuators and other robot-related components are not addressed by a detailed description in order to avoid deviations. Nevertheless, exemplary modular robots suitable for the deployment of this method have been depicted as appended Figs. 1A and B.

## Claims

1. A method for the deployment of a fog computing and storage architecture in robotic modular components making up a modular robotic system, this method (20) comprising following steps: resource accounting (30) including the substeps of computing and/or storage advertisement (31), robotic middleware databuses establishment (32), coordinator designation (33), computing and/or storage resources list compilation (34), priority task list compilation (35) and logical model building (36); task requirements listing (40) including the substeps of component availability determination (41), setting task or tasks to be performed (42), computing and/or storage inference (43), computing and/or storage model improvement (44) and resource and/or task registration list compilation (45); fog coordination (50) including the substeps of list retrieval (51), task selection (52), task request (53), publication and/or subscription to robotic middleware databuses (54), feasibility assessment (55) and subscription authorization and/or denial (56); eventually, resource externalization (60) including the substeps of task unfeasibility assessment (61), resource shortage assessment (62), external request (63), request approval (64) and access authorization and/or denial (65); training the robotic system to deploy the fog computing and/or storage model, and deployment of the fog computing and/or storage model according to this method.

2. The method of claim 1, wherein the robotic middleware employed is a communication middleware selected from: Data Distribution Service (DDS), Robot Operating System (ROS) middleware, as well as ROS 2, OPC UA binary protocol and DDS for eXtremely Resource Constrained Environments (XRCEs).

3. The method of claim 1, wherein the method is deployed in all its instances by at least one fog coordinator that is a fog module within the fog network.

4. The method of claim 1, wherein the method is deployed in all its instances by at least one fog coordinator that is not a fog module within the fog network.

5. The method of claim 1, wherein the computing and/or storage inference succeeds by employing Supervised Learning techniques combined with one or more of the following methods: Artificial Neural Networks, Support Vector Machines, linear regression, logistic regression, nearest neighbor methods, naive Bayes, decision trees, linear discriminant analysis, genetic programming, evolutionary algorithms, random forests or ensembles of classifiers.

6. The method of claim 1, wherein the training of the modular robotic system for performing this method succeeds by employing Artificial Neural Networks and Reinforcement Learning techniques, including backpropagation and stochastic gradient descent.

7. The method of claim 1, wherein the training and inference processes powered by Supervised Learning and Reinforcement Learning are deployed in the fog modules of the robotic fog layers only or combined with local computation device or devices, smart devices of any kind, server or servers connected to the robot under the same network or in a number of servers that are available at the Internet (cloud services).

8. The method of claim 1, wherein the externalization is deployed by a fog node external to the fog network.

9. A robotic system furnished to deploy the method of claim 1 in a distributed way within a plurality of fog modules.

10. A fog module of claim 8 featuring at least following parts: general purpose processors, programmable logic typically embodied in the form of FPGAs, volatile and non-volatile memory, network interfaces and instances of such where Ethernet or industrial networks can be employed by applying Time Sensitive Networking (TSN) standards, a plurality of sensors, a plurality of actuators, means of power management allowing for selective lifecycle control, maintenance prediction and quality assurance.

11. The distributed fog computing and storage architectures following from the method of claim 1 and dependent claims deployed in modular robotic systems following from claim 9 employing fog modules following from claim 10.
